(19) **Europäisches Patentamt**

**European Patent Office**

**Office européen des brevets**

(11) **EP 0 871 101 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(51) Int Cl.⁷: **G05D 3/10**, G05B 19/40

(21) Anmeldenummer: **98106500.6**

(22) Anmeldetag: **08.04.1998**

(54) **Verfahren zum Einstellen von Abblendeinrichtungen**

Process for adjusting blind systems

Méthode d'ajustement des dispositifs obsurcissant

(84) Benannte Vertragsstaaten:
**AT BE CH DE ES FR GB IT LI**

(30) Priorität: **08.04.1997 DE 19714525**

(43) Veröffentlichungstag der Anmeldung:
**14.10.1998 Patentblatt 1998/42**

(73) Patentinhaber: **Luxmate Controls GmbH**
**6850 Dornbirn (AT)**

(72) Erfinder: **Werner, Walter, Dr.**
**6850 Dornbirn (AT)**

(74) Vertreter: **Schmidt-Evers, Jürgen, Dipl.-Ing. et al**
**Patentanwälte Mitscherlich & Partner,**
**Sonnenstrasse 33**
**80331 München (DE)**

(56) Entgegenhaltungen:
**EP-A- 0 574 637          DE-C- 4 335 239**
**FR-A- 2 627 916          US-A- 4 845 415**

## Beschreibung

Die vorliegende Erfindung betrifft ein Verfahren zum Einstellen der Abblendstellung von Abblendeinrichtungen sowie ein Abblendsystem, bei dem die Abblendstellung von Abblendeinrichtungen durch eine Steuereinrichtung mit Hilfe einer Zeitsteuerung eingestellt wird.

Es ist bekannt, Jalousien oder dergleichen mit Hilfe von Gleich- oder Wechselstrommotoren zu verstellen, um somit beispielsweise den Einfall von Außenlicht in einen durch die Jalousien abgedunkelten Raum zu steuern. Ein besonderes Problem hierbei ist die genaue Ansteuerung einer gewünschten Abblendstellung bzw. Abblendposition der Jalousie.

Aus diesem Grunde wurde vorgeschlagen, mit Wechselstrom angesteuerte Jalousien über eine Zeitsteuerung anzusteuern. Bei einer derartigen Zeitsteuerung wird jedesmal, wenn der gesamte Verstellweg der Jalousie durchfahren wird, d.h. die Jalousie von der offenen Stellung in die vollständig geschlossene Stellung gebracht wird, die hierfür benötigte Zeit gemessen. Dies erfolgt durch den Einsatz von Endschaltern, die einerseits in der offenen Stellung und andererseits in der geschlossenen Stellung der Jalousie aktiviert werden. Diese Endschalter können beispielsweise in dem die Jalousie verstellenden Wechselstrommotor integriert sein. Zum Anfahren von Zwischenpositionen der Jalousie wird abhängig von der für das Durchfahren des gesamten Verstellwegs benötigten Verstellzeit die für das Einstellen einer bestimmten Abblendstellung erforderliche Verstellzeit ermittelt. Beträgt beispielsweise die für das Durchfahren des gesamten Verstellwegs benötigte Verstellzeit 30 Sekunden, kann entsprechend die halboffene Stellung der Jalousie durch eine Verstell- bzw. Fahrzeit von 15 Sekunden erreicht werden.

Durch verschiedene Umwelteinflüsse kann sich allerdings die Verstellgeschwindigkeit, und damit die für das Durchfahren des gesamten Verstellwegs benötigte Verstellzeit, verändern. Dies hat zur Folge, daß die Jalousie bei Zugriff auf eine nicht mehr gültige Gesamt-Verstellzeit nicht genau positioniert, d.h. in gewünschte Zwischenpositionen gebracht werden kann. Aus diesem Grunde wird bei einem in der EP 0 574 637 A1 beschriebenen System vorgeschlagen, jedesmal neu bei der Inbetriebnahme des Systems die für das Durchfahren des gesamten Verstellwegs benötigte Gesamt-Verstellzeit zu messen, um auf diese Weise stets auf die aktuell gültige Gesamt-Verstellzeit zugreifen zu können. Durch diese zusätzliche Messung nimmt allerdings die Inbetriebnahme des Systems verhältnismäßig viel Zeit in Anspruch.

Neben der zuvor beschriebenen Zeitsteuerung können Jalousien auch durch die Verwendung von Impulszählern eingestellt werden. Bei dieser Art der Ansteuerung wird anstelle der für den gesamten Verstellweg einer Jalousie benötigten Gesamt-Verstellzeit die Anzahl der während des Durchfahrens des gesamten Verstellwegs erzeugten Impulse gezählt, so daß einerseits durch Zählen der Impulse auf Zwischenpositionen rückgeschlossen und andererseits durch Vorgabe einer Soll-Impulsanzahl eine bestimmte Soll-Abblendstellung der Jalousie eingestellt werden kann. Der Impulszähler kann auf der Achse angeordnet sein, wobei mit jeder Umdrehung ein Impuls ausgelöst und erfaßt wird.

Die zuvor beschriebenen Steuerungsarten für Jalousien haben den Vorteil, daß sie flexibel für unterschiedliche Jalousien sowie unterschiedliche Höhen, d. h. Verstellwege, verwendet werden können, da sie sich durch die kontinuierliche Überprüfung bzw. Neumessung der für das Durchfahren des gesamten Verstellwegs benötigten Verstellzeit bzw. der dabei erzeugten Gesamt-Impulsanzahl selbst regulieren. Bei diesen Steuerungen ist jedoch problematisch, daß stets Rückmeldungen von den oben beschriebenen Endschaltern erfaßt und berücksichtigt werden müssen, wodurch sich ein relativ hoher Aufwand bei dieser Art von Steuerung ergibt. Wurde eine Jalousie durch einen manuellen Benutzereingriff verstellt, kann die neue Abblendstellung der Jalousie bei diesen Steuerungsarten nur mit einem erhöhten schaltungstechnischen Logikaufwand in der Steuerschaltung erfaßt werden.

Darüber hinaus tritt bei Abblendsystemen mit unterschiedlich dimensionierten Abblendeinrichtungen oftmals das Problem auf, daß die Abblendeinrichtungen nicht gleichmäßig verstellt werden können, da sie jeweils eine andere Zeit benötigen, um die gewünschte Endposition einzunehmen.

Der vorliegenden Erfindung liegt daher die Aufgabe zugrunde, ein Verfahren zum Einstellen der Abblendstellung von Abblendeinrichtungen eines Abblendsystems bzw. ein entsprechendes Abblendsystem anzugeben, wobei die Abblendeinrichtungen, wie beispielsweise Jalousien oder Storen, einfacher angesteuert werden können. Insbesondere soll eine synchrone Steuerung von Abblendeinrichtungen mit unterschiedlichen Gesamt-Verstellwegen ermöglicht werden.

Diese Aufgabe wird hinsichtlich des Verfahrens durch ein Verfahren gemäß Anspruch 1 und hinsichtlich des Abblendsystems durch ein Abblendsystem nach Anspruch 9 gelöst.

Die Unteransprüche beschreiben vorteilhafte Ausgestaltungen der vorliegenden Erfindung.

Erfindungsgemäß wird vor der Inbetriebnahme der Abblendeinrichtungen eine für eine für alle Abblendeinrichtungen identische Gesamt-Verstellzeit vorgegeben, welche für eine Verstellung der Abblendeinrichtungen von einer offenen Abblendstellung in eine geschlossene Abblendstellung oder umgekehrt benötigt werden soll. Insbesondere kann diese Zeitdauer hersteller- oder werksseitig vorgegeben sein. Zum Verstellen der Abblendeinrichtungen wird anhand dieser Gesamt-Verstellzeit eine einer gewünschten Abblendstellung der Abblendeinrichtungen entsprechenden Soll-Verstellzeit ermittelt, anschließend werden die Verstellmittel der Abblendeinrichtungen für eine dieser Soll-Verstellzeit entsprechende Zeitspanne aktiviert. Eine kontinuierliche Überwachung und Messung der für den gesamten Verstellweg benötigten Verstellzeit findet erfindungsgemäß nicht statt.

Um die unterschiedlichen Abblendeinrichtungen innerhalb derselben vorgegebenen Zeit synchron verstellen zu können, muß die Motordrehzahl der einzelnen gemeinsam angesteuerten Abblendeinrichtungen angepaßt werden. Dies bedeutet, daß beispielsweise eine Jalousie mit einem längeren gesamten Verstellweg mit einer höheren Motordrehzahl und entsprechend eine Jalousie mit einem kürzeren gesamten Verstellweg mit einer niedrigeren Motordrehzahl angesteuert wird. Da insbesondere die Drehzahl von Gleichstrommotoren leicht verändert und angepaßt werden kann, werden diese bei der vorliegenden Erfindung bevorzugt angewendet. Da die Motordrehzahl von Gleichstrommotoren jedoch lastabhängig und daher an sich nicht konstant ist, werden Drehzahlregulatoren bzw. Drehzahlkonstanter eingesetzt, die die Drehzahl des jeweiligen Gleichstrommotors auf einen konstanten Wert halten. Durch die Verwendung derartiger Drehzahlregulatoren können Alterungserscheinungen bzw. Umwelteinflüsse, die zu einer Veränderung der Motordrehzahl und damit der Verstellgeschwindigkeit führen würden, ausgeglichen werden. Sollte es jedoch aufgrund fortgeschrittener Alterserscheinungen oder übermäßiger Umwelteinflüsse nicht mehr möglich sein, die Drehzahl konstant zu halten, wird vorteilhafterweise von der Steuereinrichtung ein entsprechendes Fehlersignal bzw. eine entsprechende Fehlermeldung ausgegeben.

Aufgrund der erfindungsgemäßen Lösung sind keine Rückmeldungen (beispielsweise von Endschaltern) an die Steuereinrichtung nötig. Erfolgt ein manueller Benutzereingriff durch Betätigung entsprechend vorgesehener Tasten, kann allein durch Überwachung der Zeitdauer dieses Eingriffs auf die genaue Abblendstellung aller dadurch verstellter Abblendeinrichtungen geschlossen werden, ohne daß aufwendige Positionsabfragen erfolgen müssen, da erfindungsgemäß für jede angesteuerte Abblendeinrichtung die für das Durchfahren des gesamten Verstellwegs benötigte Gesamt-Verstellzeit bekannt und zudem identisch ist. Dies gilt insbesondere unabhängig von der gesamten Verstellhöhe bzw. dem gesamten Verstellweg der einzelnen Abblendeinrichtungen. Ist beispielsweise für jede angesteuerte Abblendeinrichtung bekannt, daß sie nach 30 Sekunden komplett geschlossen ist, folgt daraus, daß diese Abblendeinrichtungen entsprechend nach 15 Sekunden zur Hälfte geschlossen sind. Allein durch Vorgabe einer der gewünschten Abblendstellung entsprechenden Verstellzeit können somit mehrere Abblendeinrichtungen, wie beispielsweise Jalousien oder Storen, synchron verstellt werden, so daß die gemeinsam angeschlossenen Abblendeinrichtungen dieselbe Abblendstellung nach Ablauf derselben Verstellzeit einnehmen. Dies ist insbesondere für die Ansteuerung mehrerer nebeneinander in einer Fensterfront angeordneter Jalousien sinnvoll.

Gemäß diesem Verfahren können nicht nur Jalousien oder dergleichen verfahren werden, sondern es kann auf analoge Weise auch die Kippstellung von Lamellen von Abblendeinrichtungen eingestellt werden, da auch Lamellen zwischen einer offenen und einer geschlossenen Abblendposition bewegt werden können. Vorteilhafterweise erfolgt das Verfahren der Abblendeinrichtungen mit einer höheren Verstellgeschwindigkeit als das Kippen bzw. Verstellen der Lamellen der Abblendeinrichtungen. Durch Vorgeben einer gewünschten Verstellzeit, die einer gewünschten Abblendposition entspricht, können demnach nicht nur Jalousien in die gewünschte Abblendposition gefahren, sondern auch die Lamellen der Jalousie in die gewünschte Abblend-Kippposition gestellt werden.

Die Erfindung wird nachfolgen unter Bezugnahme auf die Zeichnung anhand bevorzugter Ausführungsbeispiele beschrieben.

Figur 1 zeigt ein vereinfachtes Blockschaltbild eines bevorzugten Ausführungsbeispiels des erfndungsgemäßen Abblendsystems,

Figur 2 zeigt eine Darstellung zur Erläuterung des erfindungsgemäßen Verfahrens zum Einstellen der Abblendstellung von Jalousien, und

Figur 3a und 3b zeigen Darstellungen zur Erläuterung des erfindungsgemäßen Verfahrens zum Einstellen der Abblendstellung von Storen oder Lamellen.

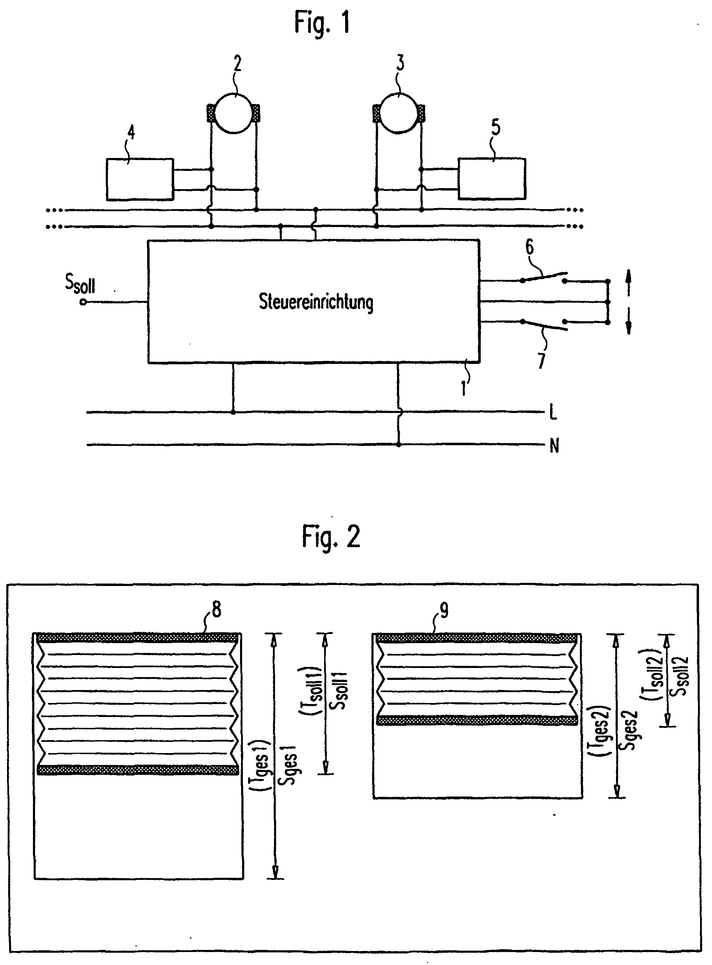

Figur 1 zeigt ein vereinfachtes Blockschaltbild eines bevorzugten Ausführungsbeispiels des erfindungsgemäßen Abblendsystems.

An ein Versorgungsspannungsnetz L, N ist eine Steuereinrichtung 1 angeschlossen, die zur Ansteuerung einer oder mehrerer Abblendeinrichtungen, wie beispielsweise Jalousien oder Storen dient. Jede dieser Abblendeinrichtungen wird durch einen Motor angetrieben, wobei in Figur 1 beispielhaft zwei Motoren 2, 3 dargestellt sind, die jeweils eine Jalousie betreiben. Vorteilhafterweise werden die einzelnen Motoren 2 und 3 über eine gemeinsame Steuerleitung durch die Steuereinrichtung 1 angesteuert, wobei im Prinzip eine beliebige Anzahl von Motoren parallel geschaltet sein können.

Bei dem in Fig. 1 gezeigten Ausführungsbeispiel werden für die Motoren 2 und 3 insbesondere Gleichstrommotoren verwendet, da sich deren Drehzal besonders einfach einstellen und anpassen läßt.

Um die Drehzahl der Gleichstrommotoren 2 und 3 konstant zu halten, sind diese Motoren mit Drehzahlkonstantern bzw. Drehzahlregulatoren 4 bzw. 5 kombiniert, die den entsprechenden Gleichstrommotor 2, 3 so regeln, daß die Drehzahl und somit die Verstellgeschwindigkeit des entsprechenden Motors konstant bleibt. Der Drehzahlkonstanter 4 bzw. 5 stellt somit die Drehzahl des Gleichstrommotors 2 bzw. 3 auf einen bestimmten konstanten Drehzahlwert ein. Auf diese Weise können Alterungserscheinungen oder Umwelteinflüsse, die ansonsten zu einer Veränderung der Motordrehzahl und damit der Verstellgeschwindigkeit führen könnten, ausgeglichen werden. Können aufgrund extremer Umwelteinflüsse oder zunehmender Alterung die Motoren 2, 3 nicht konstant gehalten werden, kann die Ausgabe einer entsprechenden Fehlermeldung - von den Drehzahlkonstantern 4, 5 oder der Steuereinrichtung 1 - vorgesehen sein.

Die Steuereinrichtung dient zum Ansteuern der Motoren 2, 3 sowie der daran angeschlossenen Jalousien, um diese in gewünschte Abblendpositionen zu bringen. Zu diesem Zweck kann der Steuereinrichtung 1 beispielsweise extern ein Sollwertsignal $S_{soll}$ zugeführt werden, welches beispielsweise einem Abblend-Sollwert für einen von den durch die Motoren 2, 3 angetriebenen Jalousien abgeblendeten Raum entspricht. Die Steuereinrichtung 1 setzt diese Sollwertinformation $S_{soll}$ in entsprechende Verstellbefehle für die Motoren 2, 3 um. Die Sollwertinformation $S_{soll}$ kann beispielsweise über eine Busleitung in einem Gebäudeleittechniksystem zugeführt werden. Ebenso ist auch denkbar, daß die Sollwertinformation $S_{soll}$ direkt eine gewünschte Abblendposition für die von den Motoren 2, 3 angesteuerten Jalousien vorgibt.

Die erfindungsgemäße Verstellung der den Motoren 2, 3 zugeordneten Jalousien soll nachfolgend unter Bezugnahme auf Figur 2 näher erläutert werden.

Figur 2 zeigt zwei in einer Fensterfront angeordnete Jalousien 8, 9, wobei die Jalousie 8 zum Abdunkeln eines größeren Fensters dient und dementsprechend eine größere Verstellhöhe, d.h. einen größeren Gesamt-Verstellweg, als die Jalousie 9 aufweist. Der Gesamt-Verstellweg der Jalousie 8 ist in Figur 2 mit $S_{ges1}$ und der Gesamt-Verstellweg der Jalousie 9 mit $S_{ges2}$ bezeichnet.

Jeder dieser Jalousien 8, 9 ist hersteller- oder werkseitig eine bestimmte Gesamt-Verstellzeit zugewiesen, die von dem Motor 2 bzw. 3 benötigt wird, um die Jalousie 8 bzw. 9 über den Gesamt-Verstellweg $S_{ges1}$ bzw. $S_{ges2}$ zu verstellen. Diese Gesamt-Verstellzeit ist neben dem Gesamt-Verstellweg $S_{ges1}$ bzw. $S_{ges2}$ auch insbesondere von der Motordrehzahl des entsprechend zugeordneten Motors 2 bzw. 3 sowie von gegebenenfalls zwischen dem Motor 2 bzw. 3 und der Jalousie 8 bzw. 9 angeordneten Übersetzungen abhängig. Jeder Jalousie 8, 9 ist somit benutzerspezifisch (bzw. anwendungsspezifisch) eine konstante Gesamt-Verstellzeit $T_{ges1}$ bzw. $T_{ges2}$ zugeordnet.

Erfindungsgemäß wird nunmehr vorgeschlagen, die Jalousien 8 und 9 synchron gemeinsam verstellen zu können, d.h. daß die Jalousien 8 und 9 unabhängig von den unterschiedlichen Gesamt-Verstellwegen $S_{ges1}$ und $S_{ges2}$ innerhalb der gleichen Zeit ganz geöffnet oder ganz geschlossen werden können. Aus diesem Grunde sind die für das Durchfahren des Gesamt-Verstellwegs $S_{ges1}$ und $S_{ges2}$ erforderlichen Gesamt-Verstellzeiten $T_{ges1}$ und $T_{ges2}$ identisch. Entsprechend muß für die Jalousie 8 mit dem größeren Gesamt-Verstellweg die Motordrehzahl des die Jalousie 8 ansteuernden Motors 2 höher als die des Motors 3, welcher die Jalousie 9 ansteuert, eingestellt bzw. gewählt werden. Da vorzugsweise jeder Jalousie ein Motor zugeordnet ist, ist dem Benutzer bereits vor Installation der Jalousie aufgrund der Kombination eines bestimmten Motors mit einer vorgegebenen Motordrehzahl und einer Jalousie mit einem vorgegebenen Gesamt-Verstellweg die für das Durchfahren des Gesamt-Verstellwegs erforderliche Gesamt-Verstellzeit bekannt und kann insbesondere der Steuereinrichtung 1 mitgeteilt werden. Ein Motor kann prinzipiell auch mehrere Jalousien ansteuern, wenn diese Jalousien dieselbe Verstellhöhe, d. h. denselben Gesamtverstellweg aufweisen.

Soll nun die Steuereinrichtung 1 die beiden Jalousien 8 und 9 - wie in Figur 2 dargestellt - jeweils in eine halboffene Stellung fahren, die gemäß Figur 2 einem Verstellweg $S_{soll1}$ bzw. $S_{soll2}$ entspricht, muß die Steuereinrichtung 1 die Motoren 2 bzw. 3 lediglich für eine Verstellzeit $T_{soll1}$ bzw. $T_{soll2}$ aktivieren. Da erfindungsgemäß vorgegeben ist, daß die Gesamt-Verstellzeit für die Jalousien 8 und 9 aufgrund der Anpassung der Motordrehzahlen der entsprechend zugeordneten Motoren 2 und 3 identisch ist, ist folglich auch für die beiden Jalousien 8 und 9 die für das Erreichen der gewünschten Abblendposition $S_{soll1}$ bzw. $S_{soll2}$ erforderliche Verstellzeit $T_{soll1}$ bzw. $T_{soll2}$ identisch.

Obwohl der für das Erreichen der gewünschten Abblendstellung erforderliche Verstellweg $S_{soll1}$ der Jalousie 8 größer ist als der entsprechende Verstellweg $S_{soll2}$ der Jalousie 9, gilt folglich: $T_{soll1} = T_{soll2}$.

Die Steuereinrichtung 1 kann somit aufgrund der Kenntnis der für alle von ihr angesteuerten Jalousien gültigen Gesamt-Verstellzeit $T_{ges}$ auf einfache Art und Weise die von ihr angesteuerten Jalousien in eine gewünschte Abblendstellung bringen, indem die die Jalousien ansteuernden Motoren für eine bestimmte Soll-Verstellzeit aktiviert werden, wobei diese Soll-Verstellzeit insbesondere aufgrund folgender Beziehung ermittelt werden kann:

$$T_{soll} = T_{ges} \times (S_{soll}/S_{ges}),$$

wobei $T_{soll}$ der Soll-Verstellzeit, $T_{ges}$ der Gesamt-Verstellzeit, $S_{soll}$ dem Soll-Verstellweg und $S_{ges}$ dem Gesamt-Verstellweg entspricht. Das Verhältnis $S_{soll}/S_{ges}$ entspricht insbesondere dem gewünschten Abblendgrad und beträgt beispielsweise bei dem in Figur 2 dargestellten Fall sowohl für die Jalousie 8 als auch für die Jalousie 9 50 %.

Wie in Figur 1 gezeigt ist, können die Motoren 2 und 3 auch manuell durch einen mit der Steuereinrichtung 1 verbundenen Aufwärtsschalter 6 bzw. Abwärtsschalter 7 betrieben und die Jalousien 8 bzw. 9 entsprechend manuell nach oben oder unten verstellt werden. Die Steuereinrichtung 1 erfaßt bei Kenntnis der Ausgangsstellung der Jalousien 8 und 9 lediglich die Dauer der Betätigung des Schalters 6 bzw. 7 und kann aufgrund der somit erfaßten Verstellzeit unmittelbar auf die neue und augenblickliche Abblendposition der Jalousien 8 und 9 schließen. Die Steuereinrichtung 1 kann somit auf einfache Art und Weise lediglich durch Überwachung der Betätigungszeit der Schalter 6 und 7 bzw. der entsprechenden Verstellzeit die aktuelle Abblendposition der von ihr angesteuerten Jalousien ermitteln.

Das zuvor anhand Figur 2 beschriebene Prinzip der vorliegenden Erfindung besitzt nicht nur für verfahrbare Jalousien Gültigkeit, sondern ist auch auf kippbare Lamellen oder Storen anwendbar.

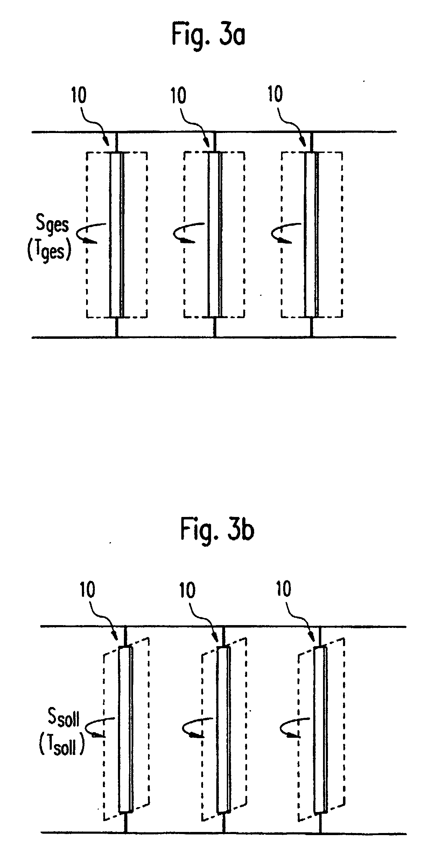

Figur 3a zeigt mehrere nebeneinander angeordnete Storen 10, die zunächst in einer geöffneten Stellung angeordnet sind, welche durch durchgezogene Linien angedeutet ist.

Die Storen 10 können in eine vollständig geschlossene Stellung gekippt bzw. gedreht werden, die durch gestrichelte Linien dargestellt ist. Der zum Verstellen der Storen von der offenen Stellung in die geschlossene Stellung erforderliche Gesamt-Verstellweg ist mit $S_{ges}$ in Figur 3a bezeichnet. Für die Storen 10 ist die für das Zurücklegen des Gesamt-Verstellwegs $S_{ges}$ erforderliche Gesamt-Verstellzeit $T_{ges}$ vorgegeben. Die in Figur 1 gezeigte Steuereinrichtung 1 kann somit einen entsprechenden Verstellmotor für die Storen 10 abhängig von einer gewünschten Storenposition $S_{soll}$ einfach dadurch ansteuern, das aufgrund der fest vorgegebenen, benutzerspezifischen bzw. anwendungsspezifischen Gesamt-Verstellzeit $T_{ges}$, die dem Gesamt-Verstellweg $S_{ges}$ entspricht, auf die der Soll-Abblendposition $S_{soll}$ entsprechende Soll-Verstellzeit $T_{soll}$ schließt und den entsprechenden Verstellmotor für die Zeitdauer $T_{soll}$ aktiviert. Auf diese Weise kann beispielsweise die in Figur 3b gezeigte halboffene Stellung der Storen 10 lediglich durch Vorgeben der Soll-Verstellzeit $T_{soll}$ eingestellt werden.

Wie bereits anhand Figur 2 erläutert worden ist, ist durch Überwachung der Verstellzeit die Steuereinrichtung 1 auch im Falle von Storen oder Lamellen stets über die aktuelle Einstellposition der Storen bzw. Lamellen 10 informiert.

Das anhand Figur 3a und 3b erläuterte Prinzip kann insbesondere auf Lamellen der in Figur 2 dargestellten Jalousien 8 und 9 angewendet werden, wobei die Steuereinrichtung 1 einerseits das Verfahren der Jalousien 8 und 9 und andererseits das Kippen der Lamellen der Jalousien 8 und 9 einstellt. Das Kippen der Lamellen und das Verfahren der Jalousie kann mit ein und demselben Motor erfolgen, wobei insbesondere das Kippen der Lamellen mit einer geringeren Verstellgeschwindigkeit als das Verfahren der Jalousien 8 und 9 durchgeführt wird. Die Vorgabe der Verstellgeschwindigkeit erfolgt mit Hilfe des entsprechenden Drehzahlkonstanters.

## Patentansprüche

1. Verfahren zum Einstellen der Abblendstellung von Abblendeinrichtungen (8, 9, 10) eines Abblendsystems, das mindestens zwei unterschiedliche Abblendeinrichtungen (8, 9, 10) mit unterschiedlichen Gesamt-Verstellwegen ($S_{ges}$) zwischen einer offenen Abblendstellung und einer geschlossenen Abblendstellung aufweist, wobei das Verfahren die folgenden Schritte umfaßt:

   a) Vor Inbetriebnahme der Abblendeinrichtungen (8, 9, 10) Vorgeben einer für alle Abblendeinrichtungen (8, 9, 10) identischen Gesamt-Verstellzeit ($T_{ges}$) durch einen Benutzer, welche für eine Verstellung der Abblendeinrichtungen (8, 9, 10) mit Hilfe von Verstellmitteln (2, 3) von einer offenen Abblendstellung in eine geschlossene Abblendstellung oder umgekehrt benötigt werden soll,
   b) Ermitteln einer einer gewünschten Abblendstellung ($S_{soll}$) der Abblendeinrichtungen (8, 9, 10) entsprechenden Soll-Verstellzeit ($T_{soll}$) anhand der Gesamt-Verstellzeit ($T_{ges}$), und
   c) Aktivieren der Verstellmittel (2, 3) der Abblendeinrichtungen (8, 9, 10) für eine der Soll-Verstellzeit ($T_{soll}$) entsprechende Zeitspanne.

2. Verfahren nach Anspruch 1,
   **dadurch gekennzeichnet,**
   **daß** in Schritt b) die Soll-Verstellzeit ($T_{soll}$) anhand der Beziehung Soll-Verstellzeit = Gesamt-Verstellzeit x (Soll-Verstellweg/Gesamt-Verstellweg) ermittelt wird, wobei der Gesamt-Verstellweg ($S_{ges}$) dem zwischen der offenen und der geschlossenen Abblendstellung liegenden Verstellweg und der Soll-Verstellweg ($S_{soll}$) dem zwischen einer Ist-Abblendstellung und der gewünschten Abblendstellung liegenden Verstellweg entspricht.

3. Verfahren nach einem der vorhergehenden Ansprüche,
   **dadurch gekennzeichnet,**
   **daß** die Verstellmittel (2, 3) einen Gleichstrommotor umfassen, dessen Drehzahl konstant gehalten wird.

4. Verfahren nach Anspruch 3,
   **dadurch gekennzeichnet,**
   **daß** eine Fehlermeldung ausgegeben wird, falls die Drehzahl des Gleichstrommotors (2, 3) nicht konstant gehalten werden kann.

5. Verfahren nach einem der vorhergehenden Ansprüche,

**dadurch gekennzeichnet;**

**daß** die Zeitdauer einer Verstellung der Abblendeinrichtungen (8, 9, 10) aus einer Ist-Abblendstellung erfaßt wird, und

**daß** durch Auswerten dieser Zeitdauer sowie der in Schritt a) festgelegten Gesamt-Verstellzeit ($T_{ges}$) auf die augenblickliche Abblendstellung der Abblendeinrichtungen (8, 9, 10) geschlossen wird.

6. Verfahren nach Anspruch 5,
**dadurch gekennzeichnet,**

**daß** die Abblendeinrichtungen (8, 9, 10) durch Betätigen eines die Verstellmittel (2, 3) aktivierenden Schalters (6, 7) verstellt wird, und

**daß** die Zeitdauer der Verstellung der Abblendeinrichtungen (8, 9, 10) durch Überwachen der Betätigungsdauer des Schalters (6, 7) erfaßt wird.

7. Verfahren nach einem der vorhergehenden Ansprüche,
**dadurch gekennzeichnet,**

**daß** zumindest eine Abblendeinrichtung (8, 9, 10) Lamellen aufweist, deren Kippstellung gemäß den Schritten a) - c) eingestellt wird.

8. Verfahren nach Anspruch 7,
**dadurch gekennzeichnet,**

**daß** die Abblendeinrichtung (8, 9, 10) zusätzlich verfahrbar ist, wobei die Verfahrstellung ebenfalls gemäß den Schritten a) - c) eingestellt wird, und

**daß** die Verstellgeschwindigkeit zum Kippen der Lamellen geringer ist als die Verstellgeschwindigkeit zum Verfahren der Abblendeinrichtung (8, 9, 10).

9. Abblendsystem,

mit mindestens zwei unterschiedlichen Abblendeinrichtungen (8, 9, 10), welche unterschiedliche Gesamt-Verstellwege ($S_{ges}$) zwischen einer offenen Abblendstellung und einer geschlossenen Abblendstellung der jeweiligen Abblendeinrichtung (8, 9, 10) besitzen,

mit einer an eine Versorgungsspannungsquelle (L, N) angeschlossenen Steuereinrichtung (1) zum Ansteuern von den Abblendeinrichtungen (8, 9, 10) zugeordneten Verstellmitteln (2, 3), um die Abblendstellung der Abblendeinrichtungen (8, 9, 10) einzustellen,

wobei die den einzelnen Abblendeinrichtungen (8, 9, 10) zugeordneten Verstellmittel (2, 3) derart eingestellt sind, daß für jede Abblendeinrichtung (8, 9, 10) die Gesamt-Verstellzeit ($T_{ges}$), welche die jeweiligen Verstellmittel (2, 3) benötigen, um die entsprechende Abblendeinrichtung (8, 9, 10) von einer offenen in eine geschlossene Abblendstellung oder umgekehrt zu verstellen, identisch ist, und

daß die Steuereinrichtung (1) die Verstellmittel (2, 3) der einzelnen Abblendeinrichtungen (8, 9, 10) gleichzeitig für eine einer gewünschten Abblendstellung ($S_{soll}$) entsprechende Aktivierungszeit ($T_{soll}$) aktiviert.

10. Abblendsystem nach Anspruch 9,
**dadurch gekennzeichnet,**

**daß** die Steuereinrichtung (1) abhängig von der gewünschten Abblendstellung ($S_{soll}$) anhand der bekannten Gesamt-Verstellzeit ($T_{ges}$) die Aktivierungszeitspanne für die Verstellmittel (2, 3) der Abblendeinrichtungen (8, 9, 10) ermittelt.

11. Abblendsystem nach Anspruch 10,
**dadurch gekennzeichnet,**

**daß** die Steuereinrichtung (1) die Aktivierungszeit ($T_{soll}$) für die Verstellmittel (2, 3) der Abblendeinrichtungen (8, 9, 10) anhand der Beziehung Aktivierungszeit = Gesamt-Verstellzeit x (Soll-Verstellweg/ Gesamt-Verstellweg) ermittelt, wobei der Gesamt-Verstellweg ($S_{ges}$) dem zwischen der offenen und der geschlossenen Abblendstellung liegenden Verstellweg und der Soll-Verstellweg ($S_{soll}$) dem zwischen einer Ist-Abblendstellung und der gewünschten Abblendstellung liegenden Verstellweg entspricht.

12. Abblendsystem nach Anspruch 10 oder 11,
**dadurch gekennzeichnet,**

**daß** der Steuereinrichtung die Ist-Abblendstellung der Abblendeinrichtungen (8, 9, 10) durch Überwachen der Verstellzeit der Abblendeinrichtungen (8, 9, 10) erfaßt.

13. Abblendsystem nach einem der Ansprüche 9 - 12,
**dadurch gekennzeichnet,**

**daß** die Steuereinrichtung (1) eine der gewünschten Abblendstellung ($S_{soll}$) entsprechende Abblendinformation vorgegeben ist.

14. Abblendsystem nach einem der Ansprüche 9 - 13,
**dadurch gekennzeichnet,**

**daß** die Verstellmittel (2, 3) einen Gleichstrommotor umfassen, dessen Drehzahl durch eine Drehzahlregulierungsanordnung (4, 5) konstant gehalten ist.

15. Abblendsystem nach Anspruch 14,
**dadurch gekennzeichnet,**

**daß** die Steuereinrichtung (1) eine Fehlermeldung erzeugt, falls die Drehzahl der Gleichstrommotoren (2, 3) nicht konstant gehalten werden kann.

16. Abblendsystem nach einem der Ansprüche 9 - 15,
**dadurch gekennzeichnet,**

**daß** die Abblendeinrichtungen (8, 9, 10) zum Abblenden ein und desselben Raums vorgesehen sind.

17. Abblendsystem nach einem der Ansprüche 9 - 16,

**dadurch gekennzeichnet,**
**daß** die Abblendeinrichtungen (8, 9, 10) Lamellen aufweisen, welche von den Verstellmitteln (2, 3) gemäß der Ansteuerung durch die Steuereinrichtung (1) verstellt werden.

**18.** Abblendsystem nach Anspruch 17,
**dadurch gekennzeichnet,**
**daß** die Abblendeinrichtungen (8, 9, 10) verfahrbar sind, wobei die Steuereinrichtung (1) die Abblendeinrichtungen (8, 9, 10) mit einer ersten Verstellgeschwindigkeit verfährt und mit einer zweiten Verstellgeschwindigkeit die Lamellen der Abblendeinrichtungen (8, 9, 10) verstellt, und wobei die erste Verstellgeschwindigkeit größer ist als die zweite Verstellgeschwindigkeit.

**Claims**

**1.** Method of setting the screening disposition of screening devices (8, 9, 10) of a screening system which has at least two different screening devices (8, 9, 10) having different overall adjustment paths ($S_{ges}$) between an open screening disposition and a closed screening disposition,
the method including the following steps;

a) before the screening devices (8, 9, 10) are put into operation, the predetermining by a user of an overall adjustment time ($T_{ges}$) identical for all screening devices (8, 9, 10), which time is to be needed for an adjustment of the screening devices (8, 9, 10) with the aid of adjustment means (2, 3) from an open screening disposition into a closed screening disposition, or vice versa,
b) determining a desired adjustment time ($T_{soll}$) corresponding to a desired screening disposition ($S_{soll}$) of the screening devices (8, 9, 10) on the basis of the overall adjustment time ($T_{ges}$), and
c) activation of the adjustment means (2, 3) of the screening devices (8, 9, 10) for a period of time corresponding to the desired adjustment time ($T_{soll}$).

**2.** Method according to claim 1,
**characterized in that**,
in step b) the desired adjustment time ($T_{soll}$) is determined on the basis of the relationship: desired adjustment time = overall adjustment time x (desired adjustment path/overall adjustment path), the overall adjustment path ($S_{ges}$) corresponding to the adjustment path between the open and the closed screening disposition and the desired adjustment path ($S_{soll}$) corresponding to the adjustment path between an actual screening disposition and the desired screening disposition.

**3.** Method according to any preceding claim,
**characterized in that**,
the adjustment means (2, 3) include a d.c. motor the speed of rotation of which is held constant.

**4.** Method according to claim 3,
**characterized in that**,
a fault report is issued in the event that the speed of rotation of the d.c. motor (2, 3) cannot be held constant.

**5.** Method according to any preceding claim,
**characterized in that**,
the time duration of an adjustment from an actual screening disposition of the screening devices (8, 9, 10) is detected , and
**in that** by means of evaluation of this time duration and the overall adjustment time ($T_{ges}$) determined in step a), the momentary screening disposition of the screening devices (8, 9, 10) is determined.

**6.** Method according to claim 5,
**characterized in that**,
the screening devices (8, 9, 10) are adjusted by means of actuation of a switch (6, 7) activating the adjustment means (2, 3), and
**in that** the time duration of the adjustment of the screening devices (8, 9, 10) is detected by means of monitoring of the actuation duration of the switch (6, 7).

**7.** Method according to any preceding claim,
**characterized in that**,
at least one screening device (8, 9, 10) has strips the tilt disposition of which is set in accordance with steps a) - c).

**8.** Method according to claim 7,
**characterized in that**,
the screening device (8, 9, 10) is additionally moveable, the movement disposition being likewise set in accordance with steps a) - c), and
**in that** the adjustment speed for tilting the strips is less than the adjustment speed for moving the screening device (8, 9, 10).

**9.** Screening system,
having at least two different screening devices (8, 9, 10) which have different overall adjustment paths ($S_{ges}$) between an open screening disposition and a closed screening disposition of the respective screening devices (8, 9, 10),
having a control device (1), connected to a supply voltage source (L, N), for controlling adjustment means (2, 3) associated with the screening devices (8, 9, 10) in order to set the screening disposition of the screening devices (8, 9, 10),
whereby the adjustment means (2, 3) associated with the individual screening devices (8, 9, 10) are so set that for each screening device (8, 9, 10) the overall adjustment time ($T_{ges}$), which the respective adjustment means (2, 3) need in order to adjust the corresponding screening device (8, 9, 10) from an open into a closed screening disposition, or vice versa, is identical and,
in that the control device (1) activates the adjustment means (2, 3) of the individual screening devices (8, 9, 10) simultaneously for an activation time ($T_{soll}$) corresponding to a desired screening disposition ($S_{soll}$).

10. Screening system according to claim 9,
    **characterized in that**,
    the control device (1) determines the activation time duration for the adjustment means (2, 3) of the screening devices (8, 9, 10) in dependence upon the desired screening disposition ($S_{soll}$) on the basis of the known overall adjustment time ($T_{ges}$).

11. Screening system according to claim 10,
    **characterized in that**,
    the control device (1) determines the activation time ($T_{soll}$) for the adjustment means (2, 3) of the screening devices (8, 9, 10) on the basis of the relationship: activation time = total adjustment time x (desired adjustment path/overall adjustment path), whereby the overall adjustment path ($S_{ges}$) corresponds to the adjustment path between the open and the closed screening disposition, and the desired adjustment path ($S_{soll}$) corresponds to the adjustment path between an actual screening disposition and the desired screening disposition.

12. Screening system according to claim 10 or 11,
    **characterized in that**,
    the control device detects the actual screening disposition of the screening devices (8, 9, 10) by means of monitoring the adjustment time of the screening devices (8, 9, 10).

13. Screening system according to any of claims 9 to 12,
    **characterized in that**,
    there is predetermined for the control device (1) screening information corresponding to the desired screening disposition ($S_{soll}$).

14. Screening system according to any of claims 9 to 13,
    **characterized in that**,
    the adjustment means (2, 3) include a d.c. motor the speed of rotation of which is held constant by means of a speed regulating arrangement (4, 5).

15. Screening system according to claim 14,
    **characterized in that**,
    the control device (1) generates a fault report if the speed of rotation of the d.c. motors (2, 3) cannot be held constant.

16. Screening system according to any of claims 9 to 15,
    **characterized in that**,
    the screening devices (8, 9, 10) are provided for screening one and the same room.

17. Screening system according to any of claims 9 to 16,
    **characterized in that**,
    the screening devices (8, 9, 10) have strips, which can be adjusted by the adjustment means (2, 3) in accordance with the control by the control device (1).

18. Screening system according to claim 17,
    **characterized in that**,
    the screening devices (8, 9, 10) are moveable, the control device (1) moving the screening devices (8, 9, 10) with a first adjustment speed and adjusting the strips of the screening devices (8, 9, 10) with a second adjustment speed, the first adjustment speed being greater than the second adjustment speed.

**Revendications**

1. Procédé d'ajustement de la position d'occultation de dispositifs occultants (8, 9, 10) d'un système d'occultation comprenant au moins deux dispositifs occultants différents (8, 9, 10) à courses différentes de réglage total ($S_{ges}$) entre une position d'occultation ouverte et une position d'occultation fermée, le procédé englobant les étapes suivantes :

   a) avant la mise en fonction des dispositifs occultants (8, 9, 10), prédétermination, par un utilisateur, d'un temps de réglage total ($T_{ges}$) qui est identique pour tous les dispositifs occultants (8, 9, 10) et est réputé nécessaire pour un réglage desdits dispositifs occultants (8, 9, 10), à l'aide de moyens de réglage (2, 3), d'une position d'occultation ouverte à une position d'occultation fermée, ou inversement,
   b) détermination, à l'appui du temps de réglage total ($T_{ges}$), d'un temps de réglage de consigne ($T_{soll}$) correspondant à une position d'occultation souhaitée ($S_{soll}$) des dispositifs occultants (8, 9, 10), et
   c) activation des moyens de réglage (2, 3) des dispositifs occultants (8, 9, 10) pour un laps de temps correspondant au temps de réglage de

consigne ($T_{soll}$).

2. Procédé selon la revendication 1,
   **caractérisé par le fait**
   **que**, durant l'étape b), le temps de réglage de consigne ($T_{soll}$) est établi à l'appui de la relation temps de réglage de consigne = temps de réglage total x (course de réglage de consigne/course de réglage total), ladite course de réglage total ($S_{ges}$) correspondant à la course de réglage située entre les positions d'occultation ouverte et fermée, et la course de réglage de consigne ($S_{soll}$) correspondant à la course de réglage située entre une position d'occultation réelle et la position d'occultation souhaitée.

3. Procédé selon l'une des revendications précédentes,
   **caractérisé par le fait**
   **que** les moyens de réglage (2, 3) englobent un moteur à courant continu dont la vitesse angulaire est maintenue constante.

4. Procédé selon la revendication 3,
   **caractérisé par le fait**
   **qu'**une indication d'erreur est délivrée pour le cas où la vitesse angulaire du moteur à courant continu (2, 3) ne peut pas être maintenue constante.

5. Procédé selon l'une des revendications précédentes,
   **caractérisé par le fait**
   **que** la durée d'un réglage des dispositifs occultants (8, 9, 10) est détectée sur la base d'une position d'occultation réelle, et
   **que** la position d'occultation instantanée des dispositifs occultants (8, 9, 10) est déduite par interprétation de cette durée, ainsi que du temps de réglage total ($T_{ges}$) fermement établi durant l'étape a).

6. Procédé selon la revendication 5,
   **caractérisé par le fait**
   **que** les dispositifs occultants (8, 9, 10) sont réglés par actionnement d'un interrupteur (6, 7) activant les moyens de réglage (2, 3), et
   **que** la durée du réglage des dispositifs occultants (8, 9, 10) est détectée par surveillance de la durée d'actionnement de l'interrupteur (6, 7).

7. Procédé selon l'une des revendications précédentes,
   **caractérisé par le fait**
   **qu'**au moins un dispositif occultant (8, 9, 10) présente des lamelles dont la position basculée est ajustée conformément aux étapes a)-c).

8. Procédé selon la revendication 7,
   **caractérisé par le fait**
   **que** le dispositif occultant (8, 9, 10) est additionnellement mobile, la position de déplacement étant semblablement ajustée conformément aux étapes a)-c), et
**que** la vitesse de réglage, en vue du basculement des lamelles, est plus faible que la vitesse de réglage en vue du déplacement du dispositif occultant (8, 9, 10).

9. Système d'occultation
   comprenant au moins deux dispositifs occultants différents (8, 9, 10) qui possèdent des courses différentes de réglage total ($S_{ges}$) entre une position d'occultation ouverte et une position d'occultation fermée du dispositif occultant (8, 9, 10) considéré, et un dispositif de commande (1) raccordé à une source de tension d'alimentation (L, N), conçu pour activer des moyens de réglage (2, 3) associés aux dispositifs occultants (8, 9, 10), afin d'ajuster la position d'occultation desdits dispositifs occultants (8, 9, 10),
   les moyens de réglage (2, 3), associés aux dispositifs occultants individuels (8, 9, 10), étant ajustés de façon telle que le temps de réglage total ($T_{ges}$), nécessité par les moyens respectifs de réglage (2, 3) pour déplacer le dispositif occultant correspondant (8, 9, 10) d'une position d'occultation ouverte à une position d'occultation fermée, ou inversement, soit identique pour chaque dispositif occultant (8, 9, 10), et
   **que** le dispositif de commande (1) active simultanément les moyens de réglage (2, 3) des dispositifs occultants individuels (8, 9, 10), pour un temps d'activation ($T_{soll}$) correspondant à une position d'occultation souhaitée ($S_{soll}$).

10. Système d'occultation selon la revendication 9,
    **caractérisé par le fait**
    **que** le dispositif de commande (1) établit le laps de temps d'activation, pour les moyens de réglage (2, 3) des dispositifs occultants (8, 9, 10), en fonction de la position d'occultation souhaitée ($S_{soll}$) et à l'appui du temps de réglage total ($T_{ges}$) connu.

11. Système d'occultation selon la revendication 10,
    **caractérisé par le fait**
    **que** le dispositif de commande (1) établit le temps d'activation ($T_{soll}$), pour les moyens de réglage (2, 3) des dispositifs occultants (8, 9, 10), sur la base de la relation temps d'activation = temps de réglage total x (course de réglage de consigne/course de réglage total), ladite course de réglage total ($S_{ges}$) correspondant à la course de réglage située entre les positions d'occultation ouverte et fermée, et la course de réglage de consigne ($S_{soll}$) correspondant à la course de réglage située entre une position d'occultation réelle et la position d'occultation souhaitée.

**12.** Système d'occultation selon la revendication 10 ou 11,

**caractérisé par le fait**

**que** le dispositif de commande détecte la position d'occultation réelle des dispositifs occultants (8, 9, 10) par surveillance du temps de réglage desdits dispositifs occultants (8, 9, 10).

**13.** Système d'occultation selon l'une des revendications 9-12,

**caractérisé par le fait**

**que** le dispositif de commande (1) reçoit préalablement une information d'occultation correspondant à la position d'occultation souhaitée ($S_{soll}$).

**14.** Système d'occultation selon l'une des revendications 9-13,

**caractérisé par le fait**

**que** les moyens de réglage (2, 3) englobent un moteur à courant continu dont la vitesse angulaire est maintenue constante par un ensemble (4, 5) régulateur de vitesse angulaire.

**15.** Système d'occultation selon la revendication 14,

**caractérisé par le fait**

**que** le dispositif de commande (1) génère une indication d'erreur pour le cas où la vitesse angulaire des moteurs à courant continu (2, 3) ne peut pas être maintenue constante.

**16.** Système d'occultation selon l'une des revendications 9-15,

**caractérisé par le fait**

**que** les dispositifs occultants (8, 9, 10) sont prévus pour l'obscurcissement d'un seul et même local.

**17.** Système d'occultation selon l'une des revendications 9-16,

**caractérisé par le fait**

**que** les dispositifs occultants (8, 9, 10) présentent des lamelles qui sont réglées, par les moyens de réglage (2, 3), en conformité avec l'activation par le dispositif de commande (1).

**18.** Système d'occultation selon la revendication 17,

**caractérisé par le fait**

**que** les dispositifs occultants (8, 9, 10) sont mobiles, le dispositif de commande (1) déplaçant lesdits dispositifs occultants (8, 9, 10) avec une première vitesse de réglage, et réglant les lamelles desdits dispositifs occultants (8, 9, 10) avec une seconde vitesse de réglage, la première vitesse de réglage étant plus grande que la seconde vitesse de réglage.

# Fig. 1

Steuereinrichtung

$S_{soll}$

L

N

# Fig. 2

## Fig. 3a

## Fig. 3b